# EUROPÄISCHE PATENTSCHRIFT

(11) **EP 2 643 188 B1**
(45) Veröffentlichungstag und Bekanntmachung des Hinweises auf die Patenterteilung: **04.10.2017**
(21) Anmeldenummer: 11785642.7
(22) Anmeldetag: 14.11.2011
(51) Int. Cl.: B60Q 1/48, B60Q 1/52, B60R 1/00, B62D 15/02, G08G 1/16, B60Q 9/00

(54) **VERFAHREN UND VORRICHTUNG ZUM UNTERSTÜTZEN EINES FAHRERS EINES KRAFTFAHRZEUGS BEIM AUSPARKEN AUS EINER PARKLÜCKE UND KRAFTFAHRZEUG**
METHOD AND DEVICE FOR ASSISTING A DRIVER OF A MOTOR VEHICLE WHEN EXITING A PARKING SPACE, AND MOTOR VEHICLE
PROCÉDÉ ET DISPOSITIF D'ASSISTANCE À UN CONDUCTEUR D'UN VÉHICULE AUTOMOBILE LORSQU'IL QUITTE UN CRÉNEAU DE STATIONNEMENT ET VÉHICULE AUTOMOBILE

(30) Priorität: 23.11.2010 DE 102010052304
(43) Veröffentlichungstag der Anmeldung: 02.10.2013
(73) Patentinhaber: Valeo Schalter und Sensoren GmbH, 74321 Bietigheim-Bissingen (DE)
(72) Erfinder: REILHAC, Patrice, 73732 Esslingen (DE); BARTH, Harald, 70825 Korntal-Muenchingen (DE)
(86) Internationale Anmeldenummer: PCT/EP2011/070025
(87) Internationale Veröffentlichungsnummer: WO 2012/069330

(56) Entgegenhaltungen:
- EP-A1- 1 731 366
- EP-A1- 1 878 615
- US-A1- 2008 211 644
- US-A1- 2008 306 666
- US-A1- 2010 201 508
- US-A1- 2010 253 780

## Beschreibung

Die Erfindung betrifft ein Verfahren zum Warnen eines Fahrers eines Kraftfahrzeugs vor der Anwesenheit eines fahrzeugexternen beweglichen Objektes auf einer an eine Parklücke angrenzenden Fahrbahn beim Ausparken des Kraftfahrzeugs aus der Parklücke. Das Objekt wird durch Sensormittel des Kraftfahrzeugs detektiert, und anhand von Sensordaten der Sensormittel wird eine aktuelle Entfernung des Objektes vom Kraftfahrzeug ermittelt. Die Erfindung betrifft außerdem eine Vorrichtung, welche zum Durchführen eines solchen Verfahrens ausgebildet ist, wie auch ein Kraftfahrzeug mit einer derartigen Vorrichtung.

Also gilt das Interesse vorliegend einem Fahrerassistenzsystem, durch welches der Fahrer eines Kraftfahrzeugs beim Ausparken des Kraftfahrzeugs aus einer Parklücke unterstützt wird. Solche Fahrerassistenzsysteme sind bereits Stand der Technik. Sie sind auch unter der Bezeichnung "Cross Traffic Alert" Systeme bekannt. Solche Fahrerassistenzsysteme haben die Aufgabe, den Fahrer über die Anwesenheit von anderen Objekten beziehungsweise Hindernissen zu informieren, die sich auf der an die Parklücke angrenzenden Straße befinden. Diese Fahrerassistenzsysteme beruhen auf der Problematik, dass es für den Fahrer oft nicht möglich ist, während des Vorgangs des Ausparkens aus der Parklücke andere, querfahrende Fahrzeuge zu erkennen. Diese Problematik besteht insbesondere dann, wenn aus der Parklücke rückwärts ausgeparkt wird.

Ein genanntes Fahrerassistenzsystem ist beispielsweise aus dem Dokument EP 1 685 001 B1 bekannt. Beim Ausparken eines Fahrzeugs aus einer Parklücke wird mithilfe eines Sensors der Abstand zwischen dem eigenen Kraftfahrzeug und einem anderen Kraftfahrzeug gemessen, welches sich quer zum eigenen Fahrzeug bewegt. Es wird eine Relativgeschwindigkeit des querfahrenden Kraftfahrzeugs bezüglich des eigenen Kraftfahrzeugs ermittelt. In Abhängigkeit von der Relativgeschwindigkeit, dem Abstand sowie der eigenen Fahrzeuggeschwindigkeit wird dann ein senkrechter Abstand zwischen dem Heck des eigenen Kraftfahrzeugs und einer verlängerten Fahrlinie des querfahrenden Fahrzeugs berechnet. Aus dem senkrechten Abstand wird ein Gefahrenmaß errechnet, und nach Überschreiten einer Grenzwertschwelle für das Gefahrenmaß wird eine Warneinrichtung aktiviert. Der momentane Abstand zwischen dem eigenen Kraftfahrzeug und dem querfahrenden Kraftfahrzeug kann auch mittels einer optischen Abstandsanzeige angezeigt werden. Dies kann zum Beispiel mittels farbiger Leuchtdioden erfolgen.

Aus dem Dokument US2010/253780 ist eine Fahrzeugeinrichtung bekannt, die aus mehreren Frontkameras, Rückfahrkameras, Ultraschallsensoren, eine Recheneinrichtung und eine Anzeigeeinrichtung besteht. Mit einer solchen Einrichtung können Bilder angezeigt werden, die Informationen zu der Entfernung eines detektierten Objekts enthalten. Das Dokument US2010/253780 A1 ist als nächstliegender Stand der Technik nach dem Oberbegriff des Anspruchs 1 zu sehen. Es ist Aufgabe der Erfindung, eine Lösung aufzuzeigen, wie bei einem Verfahren der eingangs genannten Gattung der Fahrer besonders zuverlässig vor der Anwesenheit des fahrzeugexternen Objektes auf der an die Parklücke angrenzenden Fahrbahn gewarnt werden kann.

Diese Aufgabe wird erfindungsgemäß durch ein Verfahren mit den Merkmalen gemäß Patentanspruch 1 gelöst, wie auch durch eine Vorrichtung mit den Merkmalen des Patentanspruchs 11 sowie durch ein Kraftfahrzeug mit den Merkmalen des Patentanspruchs 12. Vorteilhafte Ausführungen der Erfindung sind Gegenstand der abhängigen Patentansprüche und der Beschreibung.

Ein erfindungsgemäßes Verfahren dient zum Warnen eines Fahrers eines Kraftfahrzeugs vor der Anwesenheit eines fahrzeugexternen beweglichen Objektes - etwa eines anderen Kraftfahrzeugs -, das sich auf einer Fahrbahn befindet, die an eine Parklücke angrenzt. Das Kraftfahrzeug wird aus der Parklücke ausgeparkt. Das Objekt wird durch Sensormittel detektiert, und anhand von Sensordaten der Sensormittel wird eine aktuelle Entfernung des Objektes vom Kraftfahrzeug ermittelt. Erfindungsgemäß wird eine Bilddarstellung erzeugt, welche eine Draufsicht auf zumindest einen Bereich des Kraftfahrzeugs von oben zeigt und in welcher die Entfernung des Objektes vom Kraftfahrzeug optisch visualisiert wird. Das Warnen des Fahrers beinhaltet, dass die Bilddarstellung auf einer optischen Anzeigeeinrichtung angezeigt wird.

Ein Kerngedanke der vorliegenden Erfindung besteht somit darin, eine Bilddarstellung zu erzeugen und anzuzeigen, in welcher einerseits zumindest ein Bereich des Kraftfahrzeugs optisch dargestellt ist und andererseits auch die Entfernung des Objektes vom Kraftfahrzeug optisch visualisiert wird. Eine solche Vorgehensweise ist besonders benutzerfreundlich, und der Fahrer kann insgesamt besonders zuverlässig vor einer potentiellen Gefahr gewarnt werden. Auf der Anzeigeeinrichtung werden nämlich in der angezeigten Bilddarstellung gleichzeitig das eigene Kraftfahrzeug sowie die gemessene Entfernung optisch visualisiert. Es ist mit einer solchen optischen Anzeigeeinrichtung mit der angezeigten Bilddarstellung außerdem möglich, die gemessene Entfernung des Objektes vom Kraftfahrzeug auf verschiedenste Art und Weise zu visualisieren, nämlich neben dem eigenen Kraftfahrzeug. Der Fahrer kann anhand der Bilddarstellung nicht nur besonders leicht auf die aktuelle Entfernung des Objektes, sondern auch gegebenenfalls auf die aktuelle relative Position des Objektes bezüglich des Kraftfahrzeugs zurück schließen. Das gleichzeitige Visualisieren des eigenen Kraftfahrzeugs einerseits und der gemessenen Entfernung andererseits hat also insbesondere den Vorteil, dass sich der Fahrer anhand der Bilddarstellung ein gutes Bild der tatsächlichen augenblicklichen Verkehrssituation ohne viel Aufwand verschaffen kann.

Dabei beinhaltet das Visualisieren der Entfernung, dass in der Bilddarstellung ein Symbol optisch hervorgehoben wird, welches das Objekt in seiner Entfernung vom Kraftfahrzeug darstellt beziehungsweise charakterisiert. Die Bilddarstellung kann also neben dem eigenen Kraftfahrzeug auch ein Symbol zeigen, welches das fahrzeugexterne Objekt symbolisiert und dessen Abstand vom Kraftfahrzeug in der Bilddarstellung mit der tatsächlichen Entfernung des Objektes vom Kraftfahrzeug zusammenhängt. Nähert sich das Objekt dem Kraftfahrzeug, so nähert sich vorzugsweise auch in der Bilddarstellung das Symbol dem abgebildeten Kraftfahrzeug. Anhand des Symbols kann der Fahrer die Gefahr einer Kollision zwischen dem Kraftfahrzeug und dem Objekt relativ gut und ohne viel Aufwand einschätzen und gegebenenfalls auch rasch reagieren. Der Fahrer kann sich also ein vollständiges Bild der Verkehrssituation verschaffen. Diese Ausführungsform hat außerdem den Vorteil, dass auch zu anderen fahrzeugexternen Objekten ein entsprechendes Symbol angezeigt werden kann, sodass insgesamt die jeweilige Entfernung zu einer Vielzahl von fahrzeugexternen Objekten optisch visualisiert werden kann, und zwar gleichzeitig.

Bezüglich des Symbols in der Bilddarstellung sind prinzipiell zwei verschiedene Ausführungsformen vorgesehen:
Erfindungsgemäß ist zum Visualisieren der aktuellen Entfernung des Objektes vom Kraftfahrzeug das Symbol in der Bilddarstellung gemäß einer aktuellen Geschwindigkeit des Objektes kontinuierlich oder aber schrittweise bewegt. Hier kann das Symbol beispielsweise ein Piktogramm in Form eines schematischen Kraftwagens bzw. in Form bewegen kann. Diese Ausführungsform sorgt für eine optisch ansprechende und eindeutig interpretierbare Bilddarstellung auf der Anzeigeeinrichtung.
Erfindungsgemäß ist ein der Fahrbahn entsprechender Umgebungsbereich des Kraftfahrzeugs in der Bilddarstellung in eine Vielzahl von - entlang der Fahrbahn verteilt angeordneten - Segmenten unterteilt, welche jeweils einem Wertebereich für die Entfernung zugeordnet sind. Dann erfolgt das Visualisieren der Entfernung in der Bilddarstellung derart, dass zumindest dasjenige Segment aus der Vielzahl von Segmenten als Symbol optisch hervorgehoben wird, in dessen Wertebereich die aktuelle Entfernung fällt. Die genannten Segmente können auch unterschiedlich ausgestaltet sein, und es kann prinzipiell eine beliebige Anzahl von Segmenten vorgesehen sein. Die Anzahl von Segmenten kann beispielsweise in einem Wertebereich von drei bis zehn liegen. Die Segmente befinden sich also vorzugsweise in einem Bereich der Bilddarstellung, welcher der an die Parklücke angrenzenden Fahrbahn entspricht. Bei einer Querparklücke können die Segmente in der Bilddarstellung somit hinter dem Kraftfahrzeug und/oder vor dem Kraftfahrzeug liegen. Also wird jedem Segment jeweils ein unterschiedlicher Wertebereich für die tatsächliche Entfernung des Objektes vom Kraftfahrzeug zugeordnet, und es wird mindestens dasjenige Segment optisch - etwa durch eine entsprechende Farbgebung - hervorgehoben, in dessen Wertebereich die aktuelle Entfernung des Objektes vom Kraftfahrzeug fällt. Eine solche Vorgehensweise kann relativ aufwandsarm implementiert werden und ist ebenfalls eindeutig zu interpretieren.

Beide genannten Alternativen haben den Vorteil, dass der Fahrer anhand der Bilddarstellung auf der Anzeigeeinrichtung besonders leicht und eindeutig erkennen kann, in welcher Entfernung sich das fahrzeugexterne Objekt vom eigenen Kraftfahrzeug befindet und ob gegebenenfalls noch ein Ausparken aus der Parklücke möglich ist oder nicht.

Es erweist sich als besonders vorteilhaft, wenn die Entfernung des Objektes vom Kraftfahrzeug bis zu einem Wert visualisiert wird, der größer als 20 Meter, insbesondere größer als 30 Meter, ist. Die Entfernung des Objektes vom Kraftfahrzeug kann beispielsweise bis zu einem Wert von 30 m oder 35 m oder 40 m oder 45 m oder 50 m visualisiert werden. Der Fahrer kann somit anhand der Bilddarstellung auf der Anzeigeeinrichtung auch relativ weit vom eigenen Kraftfahrzeug entfernte Objekte erkennen und das eigene Kraftfahrzeug somit besonders sicher aus der Parklücke ausparken.

Die Sensormittel, durch welche das fahrzeugexterne Objekt detektiert wird, können beispielsweise zumindest eine Kamera und/oder zumindest ein Radargerät beinhalten. Also kann das fahrzeugexterne Objekt durch eine Kamera und/oder ein Radargerät detektiert werden. Ein Radargerät hat den Vorteil, dass es ein fahrzeugexternes Objekt mit einer relativ großen Genauigkeit detektieren und auch die Entfernung des Objektes besonders präzise bestimmen kann. Wird eine Kamera eingesetzt, so können die Bilddaten der Kamera auch zur Erzeugung der Bilddarstellung verwendet werden.

Anhand von Sensordaten der Sensormittel kann auch eine aktuelle Geschwindigkeit des Objektes ermittelt werden. Dann kann in der Bilddarstellung auch die Geschwindigkeit des Objektes und/oder eine daraus errechnete Größe optisch visualisiert werden. Eine solche Vorgehensweise sorgt insbesondere für die Sicherheit beim Ausparken aus der Parklücke; denn die Geschwindigkeit des Objektes beziehungsweise die daraus berechnete Größe stellt ein Maß für die Gefahr einer Kollision zwischen dem eigenen Kraftfahrzeug und dem fahrzeugexternen Objekt beim Ausparken aus der Parklücke dar. Durch das Visualisieren der Geschwindigkeit und/oder der Größe gelingt es somit, eine Kollision zwischen dem Kraftfahrzeug und dem Objekt zu vermeiden. Der Fahrer würde nämlich bei einer relativ großen Geschwindigkeit des Objektes abwarten, bis das Objekt an dem eigenen Kraftfahrzeug vorbeigefahren ist.

Die aus der Geschwindigkeit des Objektes errechnete Größe kann beispielsweise eine Zeit (time to collision) sein, welche das Objekt bis zum Erreichen des Kraftfahrzeugs benötigt. Die Visualisierung dieser Größe hat den Vorteil, dass bei der Berechnung der Zeit bis zur Kollision nicht nur die Geschwindigkeit des Objektes, sondern auch die momentane Entfernung des Objektes vom Kraftfahrzeug berücksichtigt wird. Diese Größe stellt also das tatsächliche und zuverlässige Gefahrenmaß dar, durch welches die Gefahr einer Kollision zwischen dem Objekt und dem Kraftfahrzeug besonders präzise beschrieben wird. Das Visualisieren dieser Größe sorgt also für die Sicherheit beim Ausparken des Kraftfahrzeugs aus der Parklücke.

In einer Ausführungsform wird/werden die Geschwindigkeit und/oder die Größe durch eine Farbkodierung in der Bilddarstellung optisch visualisiert. Dies kann beispielsweise so aussehen, dass die Geschwindigkeit des Objektes und/oder die daraus errechnete Größe durch eine Farbkodierung des Symbols visualisiert wird/werden, welches das Objekt darstellt. Durch eine Farbkodierung kann der Fahrer besonders einfach auf die Geschwindigkeit des Objektes und/oder die daraus errechnete Größe und somit auch auf die tatsächliche Gefahr einer Kollision zurück schließen. Wird die genannte Zeit bis zur Kollision durch eine Farbkodierung optisch visualisiert, so kann beispielsweise die folgende Farbkodierung vorgesehen sein:
- grün, wenn die Zeit bis zur Kollision größer als 7 Sekunden ist;
- gelb, wenn die Zeit bis zur Kollision in einem Wertebereich von 3 bis 7 Sekunden liegt;
- rot, wenn die Zeit bis zur Kollision kleiner als 3 Sekunden ist.

In der angezeigten Bilddarstellung kann auch eine Bewegungsrichtung des Objektes optisch visualisiert werden. Dann kann der Fahrer anhand der Bilddarstellung auch die Bewegungsrichtung des Objektes erkennen, und er kann seine Aufmerksamkeit auf diejenige Seite des Kraftfahrzeugs richten, aus welcher das fahrzeugexterne Objekt kommt.

Die Funktionalität des erfindungsgemäßen Verfahrens kann auch mit der Funktionalität einer herkömmlichen Einparkhilfe kombiniert werden: Eine Einparkhilfe beinhaltet bekanntlich eine Vielzahl von an einem Stoßfänger des Kraftfahrzeugs angebrachten Ultraschallsensoren, die den Abstand zwischen dem Kraftfahrzeug und einem im Bereich der Parklücke befindlichen Hindernis messen. Eine Einparkhilfe dient also zur Erfassung von Abständen zwischen dem Kraftfahrzeug und anderen Hindernissen, die sich im unmittelbaren Bereich neben dem Kraftfahrzeug - etwa bis zu 12 Metern - befinden und die Parklücke auch gegebenenfalls unmittelbar begrenzen. Beinhaltet das Kraftfahrzeug eine solche, von den genannten Sensormitteln verschiedene Sensoreinrichtung, insbesondere mit zumindest einem Ultraschallsensor, so kann ein durch diese Sensoreinrichtung gemessener Abstand zwischen dem Kraftfahrzeug und einem im Bereich der Parklücke befindlichen Hindernis in der Bilddarstellung optisch visualisiert werden. Also können gleichzeitig die Entfernung des fahrzeugexternen Objektes vom Kraftfahrzeug einerseits sowie der Abstand zwischen dem Kraftfahrzeug und dem im Bereich der Parklücke befindlichen Hindernis andererseits in der Bilddarstellung optisch visualisiert werden. Eine solche Vorgehensweise hat den Vorteil, dass sich der Fahrer anhand der einzigen Anzeigeeinrichtung beziehungsweise alleine anhand der angezeigten Bilddarstellung ein komplettes Bild der gesamten Parksituation verschaffen kann, ohne dass er auf mehrere Ausgabeeinrichtungen angewiesen ist und mehrere Ausgabeeinrichtungen gleichzeitig beachten muss. Der Fahrer braucht lediglich die einzige optische Anzeigeeinrichtung zu betrachten, um sich über die gesamte Verkehrssituation um das Kraftfahrzeug herum informieren zu können. Mit nur einem einzigen Blick auf die Anzeigeeinrichtung kann der Fahrer sofort die Gefahr einer Kollision aufgrund des an der Parklücke vorbeifahrenden Objektes erkennen als auch auf einen Abstand zwischen dem Kraftfahrzeug und dem Hindernis im Bereich der Parklücke zurück schließen. Alle wichtigsten Informationen sind somit auf einen Blick erkennbar.

Das Warnen des Fahrers kann weiterhin auch beinhalten, dass ein akustischer Ton ausgegeben wird, nämlich insbesondere unter Berücksichtigung der Entfernung des Objektes vom Kraftfahrzeug und/oder der Geschwindigkeit des Objektes. Dies kann beispielsweise so aussehen, dass die Frequenz und/oder die Lautstärke des ausgegebenen Tons abhängig von der Entfernung des Objektes vom Kraftfahrzeug und/oder der Geschwindigkeit des Objektes ist/sind. Es kann beispielsweise die Beziehung gelten, dass je geringer die Entfernung des Objektes vom Kraftfahrzeug ist, desto größer die Frequenz des Tons und/oder desto lauter der Ton ist. Auf diesem Wege wird der Fahrer über die Gefahr einer Kollision auch akustisch informiert und kann eine Kollision auch dann vermeiden, wenn er momentan die optische Anzeigeeinrichtung nicht betrachtet.

Eine Kollision zwischen dem Kraftfahrzeug und dem Objekt kann besonders sicher dann vermieden werden, wenn das Kraftfahrzeug automatisch abgebremst wird, nämlich nach Erfülltsein eines auf die Entfernung und/oder die Geschwindigkeit des Objektes bezogenen vorbestimmten Bremskriteriums. Dieses Bremskriterium kann beinhalten, dass die Entfernung des Objektes kleiner als ein vorbestimmter Grenzwert ist und/oder die Geschwindigkeit des Objektes größer als ein vorbestimmter Grenzwert ist und/oder die genannte Zeit bis zur Kollision kleiner als ein vorgegebener Grenzwert ist.

In einer Ausführungsform erfolgt das Warnen des Fahrers auch unter Berücksichtigung einer aktuellen Geschwindigkeit des eigenen Kraftfahrzeugs. Dies erweist sich insbesondere bei der Ausführungsform als besonders vorteilhaft, bei welcher der Fahrer durch Ausgeben eines akustischen Tons gewarnt wird. Die Lautstärke und/oder die Frequenz dieses akustischen Tons kann nämlich auch unter Berücksichtigung der aktuellen Geschwindigkeit des Kraftfahrzeugs eingestellt werden. Beispielsweise kann folgende Beziehung gelten: Je größer die Geschwindigkeit des Kraftfahrzeugs ist, desto lauter ist der akustische Ton und/oder desto höher ist seine Frequenz.

Es ist vorzugsweise das gesamte Kraftfahrzeug, welches in der Bilddarstellung in einer Draufsicht beziehungsweise aus einer Vogelperspektive gezeigt ist. Die Bilddarstellung kann derart erzeugt werden, dass das Kraftfahrzeug mittig bzw. zentral auf der Anzeigeeinrichtung dargestellt wird.

Erfindungsgemäß wird darüber hinaus eine Vorrichtung bereitgestellt, welche zum Warnen eines Fahrers eines Kraftfahrzeugs vor der Anwesenheit eines fahrzeugexternen beweglichen Objektes auf einer an eine Parklücke angrenzenden Fahrbahn beim Ausparken des Kraftfahrzeugs aus der Parklücke ausgebildet ist. Sie umfasst Sensormittel zum detektieren des Objektes, wie auch Mittel zum Ermitteln einer Entfernung des Objektes vom Kraftfahrzeug anhand von Sensordaten der Sensormittel. Es sind darüber hinaus Mittel zum Erzeugen einer Bilddarstellung bereitgestellt, welche eine Draufsicht auf zumindest einen Bereich des Kraftfahrzeugs von oben zeigt und in welcher die Entfernung des Objektes vom Kraftfahrzeug optisch visualisiert wird. Die Vorrichtung beinhaltet auch eine optische Anzeigeeinrichtung zum Anzeigen der Bilddarstellung.

Ein erfindungsgemäßes Kraftfahrzeug beinhaltet eine erfindungsgemäße Vorrichtung.

Die mit Bezug auf das erfindungsgemäße Verfahren vorgestellten bevorzugten Ausführungsformen und deren Vorteile gelten entsprechend für die erfindungsgemäße Vorrichtung, wie auch für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1: in schematischer Darstellung ein Kraftfahrzeug mit einer Vorrichtung gemäß einer Ausführungsform der Erfindung;
- Fig. 2: in schematischer Darstellung eine Draufsicht auf eine Verkehrssituation, wobei ein Verfahren gemäß einer Ausführungsform der Erfindung näher erläutert wird;
- Fig. 3: in schematischer Darstellung eine optische Anzeigeeinrichtung mit einer angezeigten Bilddarstellung gemäß einem ersten Ausführungsbeispiel;
- Fig. 4: in schematischer Darstellung die Anzeigeeinrichtung mit einer Bilddarstellung gemäß einem zweiten Ausführungsbeispiel; und
- Fig. 5: in schematischer Darstellung die Anzeigeeinrichtung mit einer Bilddarstellung gemäß einem dritten Ausführungsbeispiel.

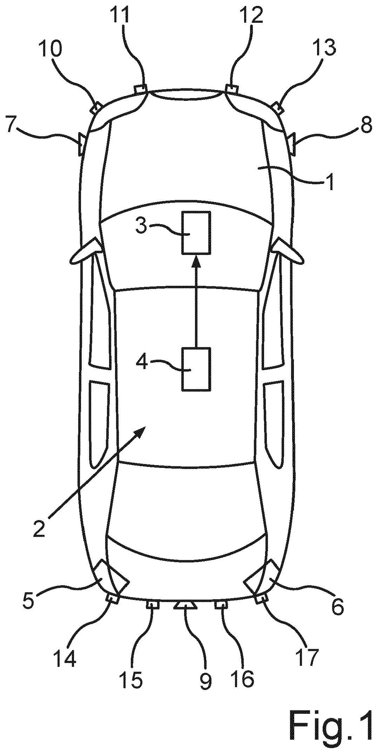

Ein in Fig. 1 dargestelltes Kraftfahrzeug 1 ist im Ausführungsbeispiel ein Personenkraftwagen. Das Kraftfahrzeug 1 beinhaltet eine Vorrichtung 2, welche zum Unterstützen eines Fahrers des Kraftfahrzeugs 1 beim Ausparken aus einer Parklücke dient. Die Vorrichtung 2 ist also ein Fahrerassistenzsystem, nämlich so genanntes "Cross-Traffic-Alert" System. Die Vorrichtung 2 beinhaltet eine optische Anzeigeeinrichtung 3, welche beispielsweise ein LCD-Display oder aber ein Head-up-Display sein kann. Die Vorrichtung 2 umfasst außerdem eine Recheneinrichtung 4, welche die Anzeigeeinrichtung 3 ansteuert. Dabei kann die Recheneinrichtung 4 eine Bilddarstellung erzeugen, die auf der Anzeigeeinrichtung 3 angezeigt werden soll.

Die Vorrichtung 2 beinhaltet außerdem zwei Radargeräte, nämlich ein erstes Radargerät 5, wie auch ein zweites Radargerät 6. Die Radargeräte 5, 6 können solche sein, die zur Detektion von fahrzeugexternen Objekten frequenz-modulierte Wellenimpulse (so genannte Chirps) aussenden können.

Die von den Radargeräten 5, 6 erfassten Sensordaten werden an die Recheneinrichtung 4 abgegeben, die die Sensordaten verarbeitet.

Die Vorrichtung 2 kann außerdem optische Kameras beinhalten, etwa eine erste Kamera 7 sowie eine zweite Kamera 8. Die Kameras 7, 8 können beispielsweise CMOS-Kameras oder aber CCD-Kameras sein. Die erste Kamera 7 kann im linken Randbereich des vorderen Stoßfängers angebracht sein, nämlich im vorderen linken Eckbereich des Kraftfahrzeugs 1. Die zweite Kamera 8 kann an der anderen Seite des Kraftfahrzeugs 1 spiegelsymmetrisch angebracht sein, etwa im rechten Randbereich des vorderen Stoßfängers beziehungsweise im vorderen rechten Eckbereich des Kraftfahrzeugs 1. Gegebenenfalls kann auch eine weitere Kamera 9 bereitgestellt sein, und zwar am Heck des Kraftfahrzeugs 1, etwa an einer Heckklappe oder aber am hinteren Stoßfänger. Die Kameras 7, 8, 9, und mindestens die Kamera 9, weisen relativ große Erfassungswinkel auf, die sogar in einem Wertebereich von 170° bis 210° liegen können. Somit kann die Kamera 9 auch die jeweiligen seitlichen Bereiche neben dem Kraftfahrzeug 1 erfassen.

Auch die von den Kameras 7, 8, 9 erfassten Sensordaten werden an die Recheneinrichtung 4 abgegeben und durch die Recheneinrichtung 4 verarbeitet.

Sowohl die Radargeräte 5, 6 als auch die Kameras 7, 8, 9 bilden insgesamt Sensormittel im Sinne der vorliegenden Anmeldung.

Das Kraftfahrzeug 1 beinhaltet auch eine Vielzahl von Ultraschallsensoren, die sowohl am vorderen Stoßfänger als auch am hinteren Stoßfänger angebracht sind. Und zwar können beispielsweise vier Ultraschallsensoren 10, 11, 12, 13 am vorderen Stoßfänger und vier Ultraschallsensoren 14, 15, 16, 17 am hinteren Stoßfänger angebracht sein. Die Ultraschallsensoren 10 bis 17 können Abstände zwischen dem Kraftfahrzeug 1 und externen Hindernissen messen, die sich im Bereich des Kraftfahrzeugs 1 befinden. Beispielsweise können die Ultraschallsensoren 10 bis 17 eine Reichweite von etwa 5 bis 15 Metern aufweisen. Diese Reichweite kann aber auch gegebenenfalls größer sein. Die durch die Ultraschallsensoren 10 bis 17 erzeugten Ultraschallsignale können ebenfalls an die Recheneinrichtung 4 abgegeben werden, und die Recheneinrichtung 4 kann diese Ultraschallsignale verarbeiten und aus diesen Ultraschallsignalen die jeweiligen Abstände berechnen.

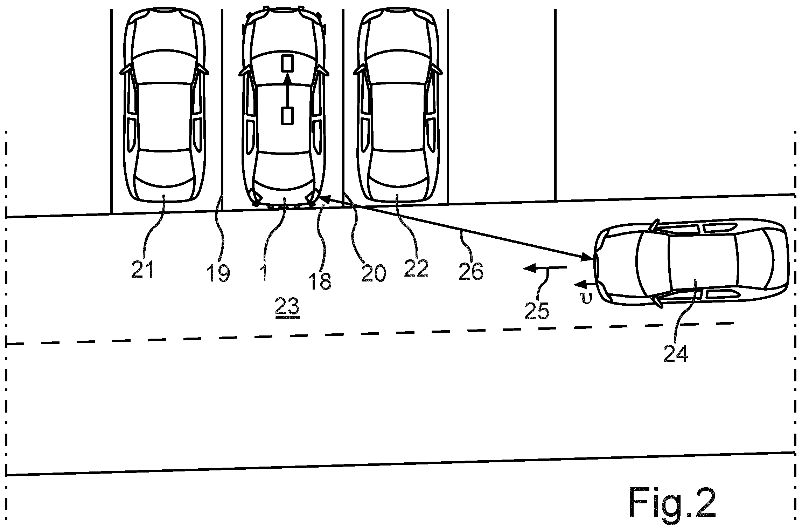

Wie bereits ausgeführt, dient die Vorrichtung 2 zum Unterstützen des Fahrers beim Ausparken aus einer Parklücke. Eine solche Verkehrssituation, in welcher der Fahrer durch die Vorrichtung 2 unterstützt wird, ist in Fig. 2 dargestellt. Das Kraftfahrzeug 1 befindet sich in einer Parklücke 18, welche seitlich durch zwei Begrenzungslinien 19, 20 unmittelbar begrenzt ist. Neben der Parklücke 18 befinden sich außerdem zwei andere Fahrzeuge, nämlich ein Fahrzeug 21 auf der linken Seite und ein Fahrzeug 22 auf der rechten Seite des Kraftfahrzeugs 1. Prinzipiell ist die Parklücke 18 also durch die anderen Fahrzeuge 21, 22 begrenzt.

An die Parklücke 18 grenzt unmittelbar eine Fahrbahn 23 an, etwa eine Straße. Die Parklücke 18 ist dabei eine Querparklücke, die senkrecht zur Fahrbahn 23 orientiert ist. Dies bedeutet, dass die Haupterstreckungsrichtung der Parklücke 18 beziehungsweise die Längsrichtung des Kraftfahrzeugs 1 mit der Haupterstreckungsrichtung der Fahrbahn 23 einen Winkel von 90° einschließt. Die Parklücke 18 befindet sich also unmittelbar neben der Fahrbahn 23.

Der Fahrer möchte nun sein Kraftfahrzeug 1 aus der Parklücke 18 ausparken. Da jedoch die anderen Fahrzeuge 21, 22 die Parklücke 18 unmittelbar begrenzen, kann der Fahrer andere Fahrzeuge (Objekte), die sich auf der Fahrbahn 23 befinden und quer zum Kraftfahrzeug 1 fahren, überhaupt nicht oder nur mit großem Aufwand erkennen. In Fig. 2 ist als bewegliches Objekt ein anderes Kraftfahrzeug 24 dargestellt, welches auf der Fahrbahn 23 gefahren wird, nämlich gemäß der Pfeildarstellung 25. Das Kraftfahrzeug 24 fährt auf derjenigen Spur der Fahrbahn 23, welche an die Parklücke 18 unmittelbar angrenzt. Eine Abhilfe für diese für den Fahrer schwierige Verkehrssituation schafft hier die Vorrichtung 2. Anhand der Sensordaten der Radargeräte 5, 6 und/oder der Kamera 9 kann die Recheneinrichtung 4 das ankommende beziehungsweise querfahrende Kraftfahrzeug 24 detektieren und den Fahrer entsprechend warnen, und zwar mithilfe der Anzeigeeinrichtung 3.

Die Recheneinrichtung 4 ermittelt anhand der Sensordaten der genannten Sensormittel (Radargeräte 5, 6 und/oder Kamera 9) die jeweils momentane Entfernung 26 des ankommenden Kraftfahrzeugs 24 vom eigenen Kraftfahrzeug 1. Außerdem ermittelt die Recheneinrichtung 4 anhand der Sensordaten eine aktuelle Geschwindigkeit v des anderen Kraftfahrzeugs 24. Die Recheneinrichtung 4 berechnet aus der Entfernung 26 sowie aus der Geschwindigkeit v des anderen Kraftfahrzeugs 24 eine Zeit, die das Kraftfahrzeug 24 benötigt, um das eigene Kraftfahrzeug 1 zu erreichen (Zeit bis zur Kollision). Die Recheneinrichtung 4 erzeugt dann eine Bilddarstellung, in welcher einerseits das eigene Kraftfahrzeug 1 abgebildet wird und andererseits auch die Entfernung 26 sowie die Zeit bis zur Kollision visualisiert werden.

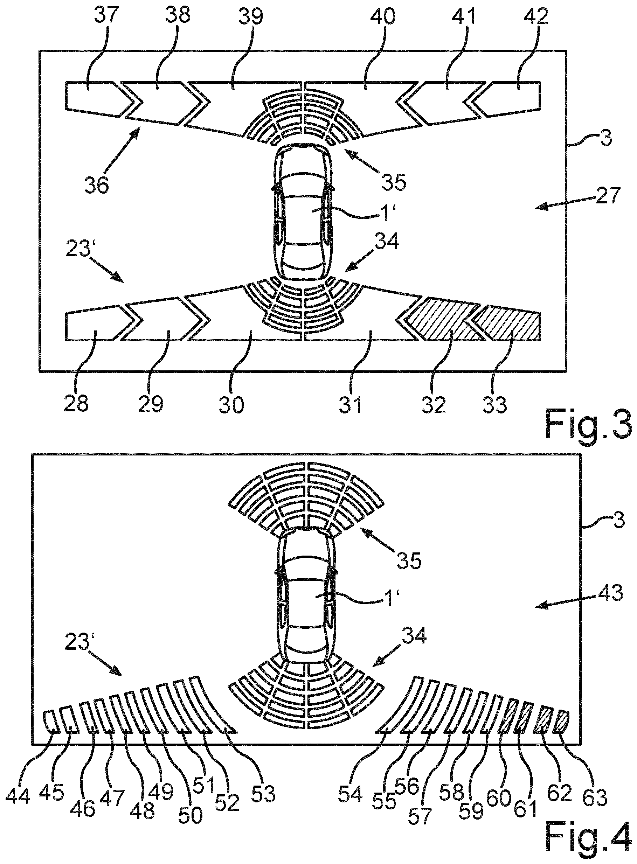

Beispielhafte Bilddarstellungen, wie sie auf der Anzeigeeinrichtung 3 angezeigt werden können, sind in den Fig. 3 bis 5 dargestellt. In Fig. 3 ist eine Bilddarstellung 27 gemäß einem ersten Ausführungsbeispiel gezeigt, wie sie auf der Anzeigeeinrichtung 3 dargestellt wird. Die Bilddarstellung 27 zeigt das eigene Kraftfahrzeug 1', und zwar vollständig und zentral beziehungsweise mittig auf der Anzeigeeinrichtung 3. Ein Bild bzw. ein Grundriss des Kraftfahrzeugs 1 kann beispielsweise in einem Speicher in der Recheneinrichtung 4 abgelegt sein. Ein der Fahrbahn 23 entsprechender Umgebungsbereich 23' des Kraftfahrzeugs 1' ist in der Bilddarstellung 27 in eine Vielzahl von Segmenten 28 bis 33 unterteilt. Die Segmente 28 bis 33 sind in der Bilddarstellung 27 hinter dem Kraftfahrzeug 1' über die Länge der Anzeigeeinrichtung 3 verteilt angeordnet, nämlich entlang des Umgebungsbereiches 23', der der Fahrbahn 23 entspricht. Die Segmente 28 bis 33 erstrecken sich also im Prinzip in Fahrzeugquerrichtung hinter dem angezeigten Kraftfahrzeug 1'. Jedem Segment 28 bis 33 ist jeweils ein anderer Wertebereich für die Entfernung 26 zugeordnet. Im Ausführungsbeispiel gemäß Fig. 3 ist der Bereich 23' insgesamt in sechs Segmente 28 bis 33 unterteilt, nämlich drei Segmente auf der linken Seite 28, 29, 30 des Kraftfahrzeugs 1' sowie drei Segmente 31, 32, 33 auf der rechten Seite des Kraftfahrzeugs 1'. Lediglich beispielsweise können folgende Wertebereiche für die Entfernung 26 genannt werden: Die äußeren Segmente 28,33 - also das äußere linke Segment 28 und das äußere Segment 33 auf der rechten Seite - können einer Entfernung 26 größer als 30 Meter zugeordnet sein. Die jeweils mittleren Segmente 29, 32 können einem Wertebereich für die Entfernung von 10 Metern bis 30 Meter zugeordnet sein. Schließlich können die inneren Segmente 30, 31 einer Entfernung kleiner als 10 Meter zugeordnet sein.

Wird nun ein bewegliches Objekt - etwa das ankommende Kraftfahrzeug 24 (siehe Figur 2) - detektiert, so wird dasjenige Segment 28 bis 33 gegenüber den anderen Segmenten 28 bis 33 optisch hervorgehoben, in dessen Wertebereich die aktuelle Entfernung 26 des Kraftfahrzeugs 24 vom eigenen Kraftfahrzeug 1 fällt. Dabei wird auch die Bewegungsrichtung des anderen Kraftfahrzeugs 24 beziehungsweise die Richtung berücksichtigt, aus welcher das Kraftfahrzeug 24 kommt. Befindet sich das andere Kraftfahrzeug 24 auf der rechten Seite des eigenen Kraftfahrzeugs 1 beziehungsweise kommt dieses andere Kraftfahrzeug 24 von der rechten Seite, so wird zumindest eines der rechten Segmente 31, 32, 33 hervorgehoben. Kommt ein anderes Objekt von der linken Seite, so können die linken Segmente 28, 29, 30 hervorgehoben werden. Beträgt die aktuelle Entfernung 26 in der in Fig. 2 gezeigten Verkehrssituation beispielsweise 20 Meter, so wird das Segment 32 optisch hervorgehoben, etwa durch eine entsprechende Farbgebung, wie dies in Fig. 3 durch eine Schraffur angedeutet ist. Gleichzeitig kann auch die Hervorhebung des vorigen Segmentes aufrechterhalten werden, im vorliegenden Fall etwa des Segmentes 33. Die Farbgebung der Segmente 32, 33 kann hier abhängig von der genannten Zeit bis zur Kollision eingestellt werden. Es ist hier beispielsweise eine Farbcodierung denkbar; dies bedeutet, dass für unterschiedliche Wertebereiche der Zeit bis zur Kollision jeweils unterschiedliche Farben der Segmente 32, 33 vorgesehen sein können:
- grün, wenn die Zeit bis zur Kollision größer als 7 Sekunden ist;
- gelb, wenn die Zeit bis zur Kollision in einem Wertebereich von 3 bis 7 Sekunden liegt; und
- rot, wenn die Zeit bis zur Kollision kleiner als 3 Sekunden ist.

Also werden in der Bilddarstellung 27 gleichzeitig die Entfernung 26 sowie auch die Zeit bis zur Kollision visualisiert, und zwar neben dem abgebildeten Kraftfahrzeug 1'. Mithilfe der Anzeigeeinrichtung 3 können in derselben Bilddarstellung 27 auch die Abstände visualisiert werden, welche mithilfe der Ultraschallsensoren 10 bis 17 gemessen werden, die eine von den genannten Sensormitteln separate Sensoreinrichtung bilden. Die Ultraschallsensoren 10 bis 17 können Bestandteile einer Einparkhilfe sein. Die durch die Ultraschallsensoren 10 bis 17 gemessenen Abstände können ebenfalls anhand von Segmenten 34, 35 visualisiert werden, die neben den Segmenten 28 bis 33 in der Bilddarstellung 27 gezeigt werden können. Die Segmente 34, 35 sind bogenförmige Segmente. Jedem Ultraschallsensor 10 bis 17 kann dabei eine Vielzahl von Segmenten 34, 35 zugeordnet sein, die jeweils in unterschiedlichen Abständen zum zugeordneten Ultraschallsensor 10 bis 17 liegen. Die gemessenen Abstände können hier ebenfalls mithilfe einer entsprechenden Farbgebung visualisiert werden. Jedem Segment 34, 35 kann ebenfalls ein Wertebereich für den Abstand zugeordnet sein. Durch die Ultraschallsensoren 10 bis 17 können beispielsweise Abstände zwischen dem Kraftfahrzeug 1 und den anderen Fahrzeugen 21, 22 gemessen werden, die neben dem Kraftfahrzeug 1 stehen und die Parklücke 18 unmittelbar begrenzen.

Es ist auch möglich, dass das Kraftfahrzeug 1 nicht rückwärts, sondern vorwärts aus der Parklücke 18 ausgeparkt wird. Es kann nämlich auch eine andere Fahrbahn an die Parklücke 18 angrenzen, etwa auf der anderen Seite der Parkbahn 18. In diesem Falle können fahrzeugexterne Objekte ebenfalls detektiert werden, und zwar anhand von Sensordaten der Kameras 7, 8 und/oder anhand von Sensordaten weiterer, gegebenenfalls vorhandener Radargeräte, die dann im vorderen Bereich des Kraftfahrzeugs 1 angeordnet sein können. Wie in der Bilddarstellung 27 gemäß Fig. 3 ist auch ein weiterer Bereich 36, welcher einer weiteren, vor dem Kraftfahrzeug 1 liegenden Fahrbahn entspricht, ebenfalls in insgesamt sechs Segmente 37 bis 42 unterteilt. Auch zu diesen Segmenten 37 bis 42 sind jeweils unterschiedliche Wertebereiche für die Entfernung zugeordnet. Die Segmente 37 bis 42 haben im Prinzip dieselbe Funktion wie die hinteren Segmente 28 bis 33 und dienen somit zur optischen Visualisierung von Entfernungen sowie der Zeit bis zur Kollision in Bezug auf ein anderes Objekt, welches sich auf der vor dem Kraftfahrzeug 1 befindlichen Fahrbahn bewegt.

In Fig. 4 ist eine Bilddarstellung 43 gemäß einem zweiten Ausführungsbeispiel gezeigt, wie sie auf der Anzeigeeinrichtung 3 dargestellt werden kann. Die Bilddarstellung 43 entspricht im Wesentlichen der Bilddarstellung 27 gemäß Fig. 3, mit dem Unterschied, dass der Bereich 23' insgesamt in zwanzig Segmente 44 bis 63 unterteilt ist. Es sind nämlich zehn Segmente 44 bis 53 auf der linken Seite sowie ebenfalls zehn Segmenten 54 bis 63 auf der rechten Seite vorgesehen. Die Segmente 44 bis 63 sind hier bogenförmig ausgeführt. Auch hier ist jedem der Segmente 44 bis 63 ein Wertebereich für die Entfernung 26 zugeordnet:
- die äußeren Segmente 44, 63 sind einem Wertbereich von 45 bis 50 Meter zugeordnet;
- die Segmente 45 und 62 einem Wertebereich von 40 bis 45 Meter;
- die Segmente 46 und 61 einem Wertebereich von 35 bis 40 Meter;
- die Segmente 47 und 60 einem Wertebereich von 30 bis 35 Meter;
- die Segmente 48 und 59 einem Wertebereich von 25 bis 30 Meter;
- die Segmente 49 und 58 einem Wertebereich von 20 bis 25 Meter;
- die Segmente 50 und 57 einem Wertebereich von 15 bis 20 Meter;
- die Segmente 51 und 56 einem Wertebereich von 10 bis 15 Meter;
- die Segmente 52 und 55 einem Wertebereich von 5 bis 10 Meter; und
- die Segmente 53 und 54 einer Entfernung kleiner als 5 Meter.

Auch hier werden entsprechende Segmente 44 bis 63 durch eine Farbgebung hervorgehoben. Beträgt die Entfernung 26 (siehe Fig. 2) beispielsweise 32 Meter, so wird das Segment 60 farbig hervorgehoben, wobei die Farbgebung - wie oben bereits dargestellt - von der aktuellen Zeit bis zur Kollision abhängig ist. Gleichzeitig können auch die vorherigen Segmente 61 bis 63 hervorgehoben werden beziehungsweise ihre Hervorhebung kann aufrechterhalten werden.

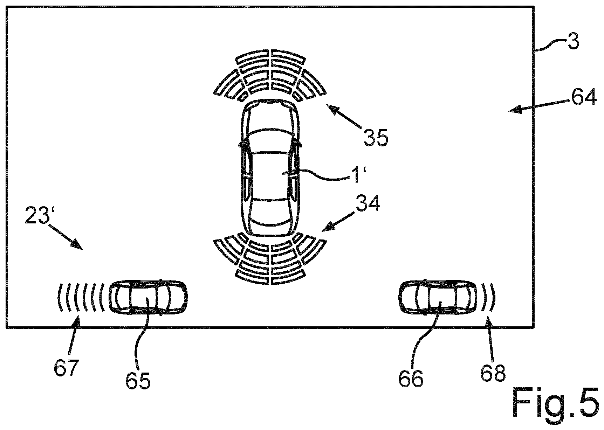

In Fig. 5 ist eine weitere Bilddarstellung 64 gemäß einem dritten Ausführungsbeispiel dargestellt, wie sie auf der Anzeigeeinrichtung 3 gezeigt werden kann. Auch diese Bilddarstellung 64 hat im Prinzip die gleiche Funktion wie die Bilddarstellungen 27 und 43 gemäß den Fig. 3 und 4, sodass lediglich die Unterschiede dazwischen näher erläutert werden: In dem der Fahrbahn 23 entsprechenden Bereich 23' sind nun statt der Segmente 28 bis 33 und 44 bis 63 Piktogramme beziehungsweise Fahrzeugsymbole 65, 66 dargestellt, welche ebenfalls - wie die Segmente 28 bis 33 und 44 bis 63 - Symbole sind, welche fahrzeugexterne Objekte (etwa das Kraftfahrzeug 24) darstellen beziehungsweise symbolisieren. Diese Fahrzeugsymbole 65, 66 können in der Bilddarstellung 64 auf der Anzeigeeinrichtung 3 bewegt werden, und zwar entweder Schrittweise oder aber kontinuierlich. Die Fahrzeugsymbole 65, 66 werden entsprechend der gemessenen Geschwindigkeit der jeweiligen fahrzeugexternen Objekte bewegt. Im Ausführungsbeispiel gemäß Fig. 5 befindet sich auf der linken Seite sowie auf der rechten Seite des Kraftfahrzeugs 1' jeweils ein Fahrzeugsymbol 65, 66, welches ein tatsächliches fahrzeugexternes Objekt symbolisiert. Das Fahrzeugsymbol 66 kann beispielsweise das andere Kraftfahrzeug 24 symbolisieren, wie es in Fig. 2 dargestellt ist. Durch eine Farbkodierung der Fahrzeugsymbole 65, 66 kann hier die gemessene Geschwindigkeit der jeweiligen Objekte und/oder die Zeit bis zur Kollision optisch visualisiert werden. Es kann hier beispielsweise die oben bereits genannte Farbcodierung gelten. Zusätzlich kann die jeweilige Geschwindigkeit der Objekte in der Weise visualisiert werden, dass die dargestellten Fahrzeugsymbole 65, 66 jeweils einen Schweif 67, 68 aufweisen, dessen Länge proportional zur gemessenen Geschwindigkeit ist. Der jeweilige Schweif 67, 68 ist also ein Symbol, welches die Geschwindigkeit des fahrzeugexternen Objektes visualisiert.

In allen Bilddarstellungen 27, 43, 64 können lediglich diejenigen fahrzeugexternen Objekte 24 visualisiert werden, die sich in Richtung zum Kraftfahrzeug 1 hin bewegen. Sich weg vom Kraftfahrzeug 1 bewegende Objekte 24 können dabei ausgeblendet beziehungsweise ausgefiltert werden. Die fahrzeugexternen Objekte werden somit solange angezeigt, bis sie an dem Kraftfahrzeug 1 vorbeifahren.

Es ist auch möglich, dass der Fahrer mithilfe einer akustischen Ausgabeeinrichtung gewarnt wird. Es kann beispielsweise ein akustischer Ton ausgegeben werden, dessen Frequenz und/oder Lautstärke abhängig von der gemessenen Entfernung 26 und/oder abhängig von der Geschwindigkeit des fahrzeugexternen Objektes 24 ist. Diese Lautstärke und/oder die Frequenz kann auch abhängig von der Geschwindigkeit des eigenen Kraftfahrzeugs 1 sein.

Es kann auch vorgesehen sein, dass die Recheneinrichtung 4 Steuerbefehle an ein Bremssystem des Kraftfahrzeugs 1 abgibt, aufgrund welcher das Bremssystem aktiviert und das Kraftfahrzeug 1 abgebremst wird. Das Abbremsen des Kraftfahrzeugs 1 kann nach Erfülltsein eines Bremskriteriums erfolgen, etwa dann, wenn die Entfernung 26 einen Grenzwert unterschreitet und/oder die Geschwindigkeit v des fahrzeugexternen Objektes 24 größer als ein vorbestimmter Grenzwert ist. Das Bremskriterium kann auch so aussehen, dass das Kraftfahrzeug 1 dann automatisch abgebremst wird, wenn die genannte Zeit bis zur Kollision einen Grenzwert unterschreitet.

## Patentansprüche

1. Verfahren zum Warnen eines Fahrers eines Kraftfahrzeugs (1) vor der Anwesenheit eines fahrzeugexternen beweglichen Objektes (24) auf einer an eine Parklücke (18) angrenzenden Fahrbahn (23) beim Ausparken des Kraftfahrzeugs (1) aus der Parklücke (18), mit den Schritten:
- Detektieren des Objektes (24) durch Sensormittel (5 bis 9) und
- anhand von Sensordaten der Sensormittel (5 bis 9) Ermitteln einer aktuellen Entfernung (26) des Objektes (24) vom Kraftfahrzeug (1),
- Erzeugen einer Bilddarstellung (27, 43, 64), welche eine Draufsicht auf zumindest einen Bereich des Kraftfahrzeugs (1') zeigt und in welcher die Entfernung (26) des Objektes (24) vom Kraftfahrzeug (1) optisch visualisiert wird, und
- Warnen des Fahrers durch Anzeigen der Bilddarstellung (27, 43, 64) auf einer optischen Anzeigeeinrichtung (3)
**gekennzeichnet durch**
das Visualisieren der Entfernung (26) beinhaltet, dass in der Bilddarstellung (27, 43, 64) ein Symbol (28 bis 33, 37 bis 42, 44 bis 63, 65, 66) optisch hervorgehoben wird, welches das Objekt (24) in seiner Entfernung (26) vom Kraftfahrzeug (1) darstellt, wobei ein der Fahrbahn (23) entsprechender Umgebungsbereich (23') des Kraftfahrzeugs (1') in der Bilddarstellung (27, 43, 64) in eine Vielzahl von Segmenten (28 bis 33, 37 bis 42, 44 bis 63) unterteilt ist, welche jeweils einem Wertebereich für die Entfernung (26) zugeordnet sind, und das Visualisieren der Entfernung (26) in der Bilddarstellung (27, 43, 64) beinhaltet, dass zumindest dasjenige Segment (28 bis 33, 37 bis 42, 44 bis 63) aus der Vielzahl von Segmenten (28 bis 33, 37 bis 42, 44 bis 63) als Symbol optisch hervorgehoben wird, in dessen Wertebereich die aktuelle Entfernung (26) fällt und
zum Visualisieren der aktuellen Entfernung (26) des Objektes (24) vom Kraftfahrzeug (1) das Symbol (65, 66) in der Bilddarstellung (27, 43, 64) gemäß einer aktuellen Geschwindigkeit (v) des Objektes (24) kontinuierlich oder schrittweise bewegt wird.

2. Verfahren nach einem der vorhergehenden Ansprüche,
**dadurch gekennzeichnet, dass**
die Entfernung (26) bis zu einem Wert visualisiert wird, der größer als 20 m, insbesondere größer als 30 m, ist.

3. Verfahren nach einem der vorhergehenden Ansprüche,
**dadurch gekennzeichnet, dass**
die Sensormittel (5 bis 9) eine Kamera (7, 8, 9) zum Detektieren des Objektes (24) und/oder ein Radargerät (5, 6) zum Detektieren des Objektes (24) umfassen.

4. Verfahren nach einem der vorhergehenden Ansprüche,
**dadurch gekennzeichnet, dass**
in der Bilddarstellung (27, 43, 64) auch eine Bewegungsrichtung des Objektes (24) visualisiert wird.

5. Verfahren nach einem der vorhergehenden Ansprüche,
**dadurch gekennzeichnet, dass**
anhand von Sensordaten der Sensormittel (5 bis 9) auch eine aktuelle Geschwindigkeit (v) des Objektes (24) ermittelt wird und in der Bilddarstellung (27, 43, 64) auch die Geschwindigkeit (v) des Objektes (24) und/oder eine daraus errechnete Größe visualisiert wird.

6. Verfahren nach Anspruch 5,
**dadurch gekennzeichnet, dass**
die aus der Geschwindigkeit (v) errechnete Größe eine Zeit ist, welche das Objekt (24) bis zum Erreichen des Kraftfahrzeugs (1) benötigt.

7. Verfahren nach Anspruch 5 oder 6,
**dadurch gekennzeichnet, dass**
die Geschwindigkeit (v) und/oder die Größe durch eine Farbcodierung in der Bilddarstellung (27, 43, 64), insbesondere eine Farbcodierung des Symbols (28 bis 33, 37 bis 42, 44 bis 63, 65, 66), optisch visualisiert wird.

8. Verfahren nach einem der vorhergehenden Ansprüche,
**dadurch gekennzeichnet, dass**
durch eine von den Sensormitteln (5 bis 9) verschiedene Sensoreinrichtung (10 bis 17), insbesondere mit zumindest einem Ultraschallsensor (10 bis 17), ein Abstand zwischen dem Kraftfahrzeug (1) und einem im Bereich der Parklücke (18) befindlichen Hindernis (21, 22) erfasst wird, und dass in der Bilddarstellung (27, 43, 64) auch dieser Abstand visualisiert wird.

9. Verfahren nach einem der vorhergehenden Ansprüche,
**dadurch gekennzeichnet, dass**
das Warnen des Fahrers weiterhin beinhaltet:
- Ausgeben eines akustischen Tons, insbesondere unter Berücksichtigung der Entfernung (26) des Objektes (24) vom Kraftfahrzeug (1) und/oder der Geschwindigkeit (v) des Objektes (24), und/oder
- Abbremsen des Kraftfahrzeugs (1) nach Erfülltsein eines auf die Entfernung (26) und/oder die Geschwindigkeit (v) des Objektes (24) bezogenen vorbestimmten Bremskriteriums.

10. Verfahren nach einem der vorhergehenden Ansprüche,
**dadurch gekennzeichnet, dass**
das Warnen des Fahrers unter Berücksichtigung einer aktuellen Geschwindigkeit des Kraftfahrzeugs (1) erfolgt.

11. Vorrichtung (2) zum Warnen eines Fahrers eines Kraftfahrzeugs (1) vor der Anwesenheit eines fahrzeugexternen beweglichen Objektes (24) auf einer an eine Parklücke (18) angrenzenden Fahrbahn (23) beim Ausparken des Kraftfahrzeugs (1) aus der Parklücke (18), mit:
- Sensormitteln (5 bis 9) zum Detektieren des Objektes (24) und
- Mitteln (4) zum Ermitteln einer Entfernung (26) des Objektes (24) vom Kraftfahrzeug (1) anhand von Sensordaten der Sensormittel (5 bis 9),
- Mittel (4) zum Erzeugen einer Bilddarstellung (27, 43, 64), welche eine Draufsicht auf zumindest einen Bereich des Kraftfahrzeugs (1') zeigt und in welcher die Entfernung (26) des Objektes (24) vom Kraftfahrzeug (1) optisch visualisiert wird, und
- eine optische Anzeigeeinrichtung (3) zum Anzeigen der Bilddarstellung (27, 43, 64)
**gekennzeichnet durch**
das Visualisieren der Entfernung (26) beinhaltet, dass in der Bilddarstellung (27, 43, 64) ein Symbol (28 bis 33, 37 bis 42, 44 bis 63, 65, 66) optisch hervorgehoben wird, welches das Objekt (24) in seiner Entfernung (26) vom Kraftfahrzeug (1) darstellt, wobei ein der Fahrbahn (23) entsprechender Umgebungsbereich (23') des Kraftfahrzeugs (1') in der Bilddarstellung (27, 43, 64) in eine Vielzahl von Segmenten (28 bis 33, 37 bis 42, 44 bis 63) unterteilt wird, welche jeweils einem Wertebereich für die Entfernung (26) zugeordnet sind, und das Visualisieren der Entfernung (26) in der Bilddarstellung (27, 43, 64) beinhaltet, dass zumindest dasjenige Segment (28 bis 33, 37 bis 42, 44 bis 63) aus der Vielzahl von Segmenten (28 bis 33, 37 bis 42, 44 bis 63) als Symbol optisch hervorgehoben wird, in dessen Wertebereich die aktuelle Entfernung (26) fällt und zum Visualisieren der aktuellen Entfernung (26) des Objektes (24) vom Kraftfahrzeug (1) das Symbol (65, 66) in der Bilddarstellung (27, 43, 64) gemäß einer aktuellen Geschwindigkeit (v) des Objektes (24) kontinuierlich oder schrittweise bewegt wird.

12. Kraftfahrzeug (1) mit einer Vorrichtung (2) nach Anspruch 11.

## Claims

1. Method for warning a driver of a motor vehicle (1) of the presence of a moving object (24) which is external to the vehicle, on a carriageway (23) adjoining a parking space (18), when the motor vehicle (1) is moving out of the parking space (18), having the steps:
- detecting the object (24) by sensor means (5 to 9) and
- determining a current distance (26) of the object (24) from the motor vehicle (1) using sensor data of the sensor means (5 to 9),
- generating an image representation (27, 43, 64), which shows a plan view of at least one area of the motor vehicle (1') and in which the distance (26) of the object (24) from the motor vehicle (1) is indicated visually, and
- warning the driver by displaying the image representation (27, 43, 64) on a visual display device (3),
**characterized by**
the visual indication of the distance (26) includes the fact that in the image representation (27, 43, 64) a symbol (28 to 33, 37 to 42, 44 to 63, 65, 66) which represents the object (24) at its distance (26) from the motor vehicle (1) is visually highlighted, wherein a surrounding area (23') of the motor vehicle (1') which corresponds to the carriageway (23) in the image representation (27, 43, 64) is divided into a multiplicity of segments (28 to 33, 37 to 42, 44 to 63) which are each assigned to a value range for the distance (26), and the visual indication of the distance (26) in the image representation (27, 43, 64) includes the fact that at least that segment (28 to 33, 37 to 42, 44 to 63) in whose value range the current distance (26) occurs, from the multiplicity of segments (28 to 33, 37 to 42, 44 to 63), is visually highlighted as a symbol and in order to visually indicate the current distance (26) of the object (24) from the motor vehicle (1), the symbol (65, 66) in the image representation (27, 43, 64) is moved continuously or incrementally in accordance with a current velocity (v) of the object (24).

2. Method according to one of the preceding claims,
**characterized in that**
the distance (26) is visually indicated up to a value which is higher than 20 m, in particular higher than 30 m.

3. Method according to either of the preceding claims,
**characterized in that**
the sensor means (5 to 9) comprise a camera (7, 8, 9) for detecting the object (24) and/or a radar device (5, 6) for detecting the object (24).

4. Method according to one of the preceding claims,
**characterized in that**
a direction of movement of the object (24) is visually indicated in the image representation (27, 43, 64).

5. Method according to one of the preceding claims,
**characterized in that**
a current velocity (v) of the object (24) is also determined using sensor data of the sensor means (5 to 9), and the velocity (v) of the object (24) and/or a variable calculated therefrom are/is also visually indicated in the image representation (27, 43, 64).

6. Method according to Claim 5,
**characterized in that**
the variable which is calculated from the velocity (v) is a time which the object (24) takes to reach the motor vehicle (1).

7. Method according to Claim 5 or 6,
**characterized in that**
the velocity (v) and/or the variable are/is indicated visually in the image representation (27, 43, 64) by colour coding, in particular colour coding of the symbol (28 to 33, 37 to 42, 44 to 63, 65, 66).

8. Method according to one of the preceding claims,
**characterized in that**
a sensor device (10 to 17) which is different from the sensor means (5 to 9) and has, in particular, at least one ultrasonic sensor (10 to 17), senses a distance between the motor vehicle (1) and an obstacle (21, 22) located in the region of the parking space (18), and **in that** this distance is also visually indicated in the image representation (27, 43, 64).

9. Method according to one of the preceding claims,
**characterized in that**
the warning of the driver also includes:
- outputting an acoustic sound, in particular taking into account the distance (26) of the object (24) from the motor vehicle (1) and/or the velocity (v) of the object (24), and/or
- braking the vehicle (1) after a predetermined braking criterion relating to the distance (26) and/or the velocity (v) of the object (24) is met.

10. Method according to one of the preceding claims, **characterized in that** the warning of the driver is carried out by taking into account a current velocity of the motor vehicle (1).

11. Device (2) for warning a driver of a motor vehicle (1) of the presence of a moving object (24) which is external to the vehicle, on a carriageway (23) adjoining a parking space (18), when the motor vehicle (1) is moving out of the parking space (18), having:
- sensor means (5 to 9) for detecting the object (24), and
- means (4) for determining a distance (26) of the object (24) from the motor vehicle (1) using sensor data of the sensor means (5 to 9),
- means (4) for generating an image representation (27, 43, 64) which shows a plan view of at least one area of the motor vehicle (1') and in which the distance (26) of the object (24) from the motor vehicle (1) is indicated visually, and
- a visual display device (3) for displaying the image representation (27, 43, 64),
**characterized by**
the visual indication of the distance (26) includes the fact that in the image representation (27, 43, 64) a symbol (28 to 33, 37 to 42, 44 to 63, 65, 66) which represents the object (24) at its distance (26) from the motor vehicle (1) is visually highlighted, wherein a surrounding area (23') of the motor vehicle (1') which corresponds to the carriageway (23) in the image representation (27, 43, 64) is divided into a multiplicity of segments (28 to 33, 37 to 42, 44 to 63) which are each assigned to a value range for the distance (26), and the visual indication of the distance (26) in the image representation (27, 43, 64) includes the fact that at least that segment (28 to 33, 37 to 42, 44 to 63) in whose value range the current distance (26) occurs, from the multiplicity of segments (28 to 33, 37 to 42, 44 to 63), is visually highlighted as a symbol and in order to visually indicate the current distance (26) of the object (24) from the motor vehicle (1), the symbol (65, 66) in the image representation (27, 43, 64) is moved continuously or incrementally in accordance with a current velocity (v) of the object (24).

12. Motor vehicle (1) having a device (2) according to Claim 11.

## Revendications

1. Procédé destiné à avertir un conducteur d'un véhicule automobile (1) de la présence d'un objet mobile extérieur au véhicule (24) sur une chaussée (23) adjacente à un emplacement de stationnement (18) lorsque le véhicule automobile (1) quitte l'emplacement de stationnement (18), comportant les étapes consistant à :
- détecter l'objet (24) à l'aide de moyens de détection (5 à 9) et,
- sur la base de de données de capteurs des moyens de détection (5 à 9), déterminer une distance actuelle (26) de l'objet (24) par rapport au véhicule automobile (1),
- générer une représentation d'image (27, 43, 64) qui affiche une vue de dessus d'au moins une région du véhicule automobile (1') et dans laquelle la distance (26) de l'objet (24) par rapport au véhicule automobile (1) est visualisée optiquement, et
- avertir le conducteur en affichant la représentation d'image (27, 43, 64) sur un dispositif d'affichage optique (3),
**caractérisé par**
la visualisation de la distance (26) consiste en ce qu'un symbole (28 à 33, 37 à 42, 44 à 63, 65, 66) est optiquement mis en surbrillance dans la représentation d'image (27, 43, 64), lequel symbole représente l'objet (24) à sa distance (26) par rapport au véhicule automobile (1), dans lequel une région environnante (23') du véhicule automobile (1') correspondant à la chaussée (23) est subdivisée, dans la représentation d'image (27, 43, 64), en une pluralité de segments (28 à 33, 37 à 42, 44 à 63) qui sont respectivement associés à une plage de valeurs de la distance (26), et contient la visualisation de la distance (26) dans la représentation d'image (27, 43, 64), en ce qu'au moins le segment (28 à 33, 37 à 42, 44 à 63), parmi la pluralité de segments (28 à 33, 37 à 42, 44 à 63), dans la plage de valeurs duquel se situe la distance actuelle (26) est optiquement mis en surbrillance en tant que symbole, et le symbole (65, 66) est déplacé en continu ou pas-à-pas dans la représentation d'image (27, 43, 64) en fonction d'une vitesse actuelle (v) de l'objet (24) pour visualiser la distance actuelle (26) de l'objet (24) par rapport au véhicule automobile (1).

2. Procédé selon l'une quelconque des revendications précédentes,
**caractérisé en ce que** la distance (26) est visualisée jusqu'à une valeur supérieure à 20 m, notamment supérieure à 30 m.

3. Procédé selon l'une quelconque des revendications précédentes,
**caractérisé en ce que** les moyens de détection (5 à 9) comprennent une caméra (7, 8, 9) destinée à détecter l'objet (24) et/ou un appareil à radar (5, 6) destiné à détecter l'objet (24).

4. Procédé selon l'une quelconque des revendications précédentes,
**caractérisé en ce qu'**une direction de mouvement de l'objet (24) est également visualisée dans la représentation d'image (27, 43, 64).

5. Procédé selon l'une quelconque des revendications précédentes,
**caractérisé en ce qu'**une vitesse actuelle (v) de l'objet (24) est également déterminée sur la base de données de capteurs des moyens de détection (5 à 9) et **en ce que** la vitesse (v) de l'objet (24) et/ou une grandeur calculée à partir de celle-ci est également visualisée dans la représentation d'image (27, 43, 64).

6. Procédé selon la revendication 5,
**caractérisé en ce que** la grandeur calculée à partir de la vitesse (v) est un temps mis par l'objet (24) pour atteindre le véhicule automobile (1).

7. Procédé selon la revendication 5 ou 6,
**caractérisé en ce que** la vitesse (v) et/ou la grandeur est visualisée optiquement dans la représentation d'image (27, 43, 64) par un codage coloré, notamment par un codage coloré du symbole (28 à 33, 37 à 42, 44 à 63, 65, 66) .

8. Procédé selon l'une quelconque des revendications précédentes,
**caractérisé en ce qu'**une distance entre le véhicule automobile (1) et un obstacle (21, 22) se trouvant dans la région de l'emplacement de stationnement (18) est détectée par un dispositif de détection (10 à 17) différent des moyens de détection (5 à 9), notamment au moyen d'au moins un capteur à ultrasons (10 à 17), et **en ce que** ladite distance est également visualisée dans la représentation d'image (27, 43, 64).

9. Procédé selon l'une quelconque des revendications précédentes,
**caractérisé en ce que** l'avertissement du conducteur consiste en outre à :
- émettre un signal acoustique, notamment en tenant compte de la distance (26) de l'objet (24) par rapport au véhicule automobile (1) et/ou de la vitesse (v) de l'objet (24), et/ou
- freiner le véhicule automobile (1) après qu'un critère de freinage prédéterminé lié à la distance (26) et/ou à la vitesse (v) de l'objet (24) a été satisfait.

10. Procédé selon l'une quelconque des revendications précédentes,
**caractérisé en ce que** l'avertissement du conducteur s'effectue en tenant compte d'une vitesse actuelle du véhicule automobile (1).

11. Dispositif (2) destiné à avertir un conducteur d'un véhicule automobile (1) de la présence d'un objet mobile extérieur au véhicule (24) sur une chaussée (23) adjacente à un emplacement de stationnement (18) lorsque le véhicule automobile (1) quitte l'emplacement de stationnement (18), comportant :
- des moyens de détection (5 à 9) destinés à détecter l'objet (24) et
- des moyens (4) destinés à déterminer une distance (26) de l'objet (24) par rapport au véhicule automobile (1) sur la base de données de capteurs des moyens de détection (5 à 9),
- des moyens (4) destinés à générer une représentation d'image (27, 43, 64) qui affiche une vue de dessus d'au moins une région du véhicule automobile (1') et dans laquelle la distance (26) de l'objet (24) par rapport au véhicule automobile (1) est visualisée optiquement, et
- un dispositif d'affichage optique (3) destiné à afficher la représentation d'image (27, 43, 64),
**caractérisé par** la visualisation de la distance (26) consiste en ce qu'un symbole (28 à 33, 37 à 42, 44 à 63, 65, 66) est optiquement mis en surbrillance dans la représentation d'image (27, 43, 64), lequel symbole représente l'objet (24) à sa distance (26) par rapport au véhicule automobile (1), dans lequel une région environnante (23') du véhicule automobile (1') correspondant à la chaussée (23) est subdivisée, dans la représentation d'image (27, 43, 64), en une pluralité de segments (28 à 33, 37 à 42, 44 à 63) qui sont respectivement associés à une plage de valeurs de la distance (26), et qui contient la visualisation de la distance (26) dans la représentation d'image (27, 43, 64), en ce qu'au moins le segment (28 à 33, 37 à 42, 44 à 63), parmi la pluralité de segments (28 à 33, 37 à 42, 44 à 63), dans la plage de valeurs duquel se situe la distance actuelle (26) est optiquement mis en surbrillance en tant que symbole, et le symbole (65, 66) est déplacé en continu ou pas-à-pas dans la représentation d'image (27, 43, 64) en fonction d'une vitesse actuelle (v) de l'objet (24) pour visualiser la distance actuelle (26) de l'objet (24) par rapport au véhicule automobile (1).

12. Véhicule automobile (1) comportant un dispositif (2) selon la revendication 11.
